# EUROPEAN PATENT APPLICATION

(11) **EP 4 080 077 A1**
(43) Date of publication of application: **26.10.2022**
(21) Application number: 21170253.5
(22) Date of filing: 23.04.2021
(51) Int. Cl.: F16D 55/22, B60T 13/38, B60T 13/04, B60T 13/58, B60T 13/74, F16D 65/18

(54) **BRAKING SYSTEM AND VEHICLE WITH BRAKING SYSTEM**

(71) Applicant: KNORR-BREMSE Systeme für Nutzfahrzeuge GmbH, 80809 München (DE)
(72) Inventor: HOLLOSI, Mate, 1097 Budapest (HU); KLINGER, Matthias, 82275 Emmering (DE); BLESSING, Michael, 80687 München (DE); PESCHEL, Michael, 82296 Schöngeising (DE); GYÖRKE, Zsombor, 8360 Keszthely (HU); MLINARCSEK, Csaba, 1165 Budapest (HU); SCHALLER, Sebastian, 86462 Langwied (DE); STANKOVIC, Dordo, 81929 München (DE); SZABO, Janos, 1042 Budapest (HU); KOKREHEL, Csaba, 1119 Budapest (HU); HÖS, Levente, 1047 Budapest (HU); MONORI, Gyula, 6065 Lakitelek (HU); KRÜGER, Sven Philip, 81476 München (DE); SCHÖFBERGER, Tobias, 84048 Mainburg (DE)
(74) Representative: Prüfer & Partner mbB Patentanwälte · Rechtsanwälte

(57) **Abstract**

The invention relates to a braking system and a vehicle with braking system and in particular relates to 2 such black system and vehicular with black system wherein the main braking system and the secondary braking system are separate. According to a first aspect, disclosed is a secondary braking system for a commercial vehicle, comprising: a rotary deceleration force generating element fixed to or being part of and thus rotating conjointly with a wheel of the vehicle, and a stationary deceleration force generating element that is indirectly or directly fixed in a manner to a chassis of the vehicle that prohibits the stationary decelerating force generating element to rotate with the rotary deceleration force generating element, wherein the stationary deceleration force generating element is configured to transmit a braking force Fb onto the rotary deceleration force generating element, and the stationary deceleration force generating element is independent from a main braking system of the commercial vehicle.

## Description

The invention relates to a braking system and a vehicle with braking system and in particular relates to such a braking system and vehicle with a braking system wherein a main braking system and a secondary braking system are separate.

Commercial vehicles, like trucks, tractor units or trailers, comprise braking systems capable of applying braking forces to axles or wheels to decelerate the commercial vehicles during a driving operation or to secure the commercial vehicles against an unintended movement during non-driving operations or in a deactivated state. Such braking systems usually consist of a main braking system and a secondary braking system. Usually, the secondary braking system serves as a backup braking system for the main braking system or provides a continuous locking function to maintain vehicle's position, in particular during a non-driving operation of the vehicle.

Such braking systems and respective brake actuators are arranged near the axle or wheel to be decelerated or secured. In the related art, the main braking system and the secondary braking system of commercial vehicles are configured in a manner that the secondary braking system either requires the complete main braking system for operation or at least uses parts of the main braking system for its operation, like friction elements like brake discs and brake pads. Employing the secondary braking system therefore may lead to wear or even damage of components that are essential for the main braking system. Vice versa, failure of specific parts of the main braking system may compromise the function of the secondary braking system that may have impact to vehicle security.

It is therefore an object of the invention to provide a secondary braking system that does not contribute to the wear of the main braking system and is not functionally harmed by failures of parts of the main braking system.

The object of the invention is solved by the subject matter of the independent claims. Further advantageous developments are subject matter of the dependent claims.

According to a first aspect, disclosed is an secondary braking system for a commercial vehicle, comprising: a rotary deceleration force generating element fixed to or being part of and thus rotating conjointly with a wheel of the vehicle, and a stationary deceleration force generating element that is indirectly or directly fixed in a manner to a chassis of the vehicle that prohibits the stationary decelerating force generating element to rotate with the rotary deceleration force generating element, wherein the stationary deceleration force generating element is configured to transmit a braking force Fb onto the rotary deceleration force generating element, and the stationary deceleration force generating element is independent from a main braking system of the commercial vehicle.

By that, parts subjected to regular wear like brake pads and movable parts more likely subjected to failure like actuators of the main braking system and the secondary braking system are separate. Thus, the secondary braking system remains operable even if heavy usage of the main braking system has led to extensive wear of wear parts.

Preferably, the rotary deceleration force generating element comprises a rotary friction element, the stationary deceleration force generating element comprises a stationary friction element that is movable between a release position and a locking position towards and away from the rotary friction element, and an actuator configured to exert force to the stationary friction element to move it between the release position and the locking position, and wherein the stationary friction element and the actuator are independent from the main braking system of the vehicle.

By this configuration, well proven members can be used for implementing the secondary braking system leading to predictable reliability

Preferably, the stationary deceleration force generating element further comprises an actuating device that is configured to exert an actuation force Fa to the secondary braking system and is independent from the main braking system.

This allows further independence from the main braking system.

Preferably, the rotary friction element is a rotary friction element that is also used by the main braking system.

Thus, parts well suited for braking are used, complexity is kept small and nevertheless, parts subjected to regular wear like brake pads and movable parts more likely subjected to failure like actuators of the main braking system and the secondary braking system are separate. Thus, despite minimal complexity, the secondary braking system remains operable even if heavy usage of the main braking system has led to extensive wear of wear parts or even to failure of the main braking system.

Preferably the rotary friction element is a brake disc, brake drum, brake disc neck or part of the wheel rim that are distinct from a rotary friction element of the main braking system.

In this configuration no common brake disc is used by the main braking system and the secondary braking system, but the main braking system and the secondary braking system comprise their own brake discs or the like. This allows that, even in a case in that the main braking system fails, e.g. due to overheating of brake pads and brake disc, the secondary braking system maintains functionality. Further, this configuration allows using a larger secondary brake disc than the main brake disc, since the secondary brake disc may be configured independently from a main brake disk and independently from space constraints affecting a main brake disc. This may increase the effectiveness of the secondary braking system.

Preferably, the rotary friction element is a brake disc that extends in an axial direction with respect to an axis about which the rotary friction element rotates.

By that, the diameter of the rotary friction element may be even more enlarged with respect to a radially extending brake disc, since the axially extending brake disc may be arranged at the maximum possible circumference, where a radially extending brake disc needs to extend inwards from that maximum possible circumference thus that the average circumference is smaller.

Preferably, the rotary friction element is a brake disc that extends in a radial direction.

Preferably, the actuating device comprises a biased spring chamber that is configured to exert the actuation force Fa to the secondary braking system in a deactivated state of the vehicle.

Thus, even with a complete system failure, the vehicle may be decelerated and hold by the secondary braking system.

Preferably, the actuator or the actuating device comprises readjusting means that maintain the brake force Fb when the stationary friction element is in the locked position even if the dimensions of the rotary friction element, the stationary friction element or the actuator change, in particular due to temperature changes.

Thus, a loosening of the brake pads from the brake disc may be prevented, even if brake pads and the brake disc shrink during the process of cooling.

Preferably, the actuation device exerts the actuation force Fa by means of a pneumatic device, in particular a pneumatic cylinder, hydraulic device, in particular a hydraulic cylinder, electro mechanic device, in particular an electric motor or mechanic device, in particular a spring.

By this configuration, well proven members can be used for implementing the secondary braking system leading to predictable reliability.

Preferably, the actuation force Fa is transmitted to the actuator via an intermediate element, in particular a Bowden cable, a pushing rod, a torque rod, a wedge, a cam or a gear. This may occur in particular with a force ratio transformation of larger than 1 or advantageously with a progressive force ratio translation.

By this configuration, well proven members can be used for implementing the secondary braking system leading to predictable reliability.

Preferably, the stationary friction element, the actuator and the actuating device are arranged around at least a section of the rotary friction element.

Preferably, the secondary braking system comprises a pushing element configured to push a stationary friction element towards the rotary friction element, and the actuation force Fa pushes the push element towards the rotary friction element such that the stationary friction element is pressed against the rotary friction element.

Preferably, the secondary braking system comprises a tie element provided with a plurality of stationary friction elements, and the actuation force Fa tightens the tie element around the rotary friction element such that the stationary friction elements are pressed against the rotary friction element.

According to a second aspect, disclosed is a commercial vehicle, in particular an electric or hybrid vehicle, comprising the secondary braking system according to any of the previous aspects.

The vehicle is preferably configured as a truck, a trailer and/or a combination of a towing vehicle and a trailer. Preferably, the vehicle is configured as an electric vehicle, in particular a battery electric or fuel cell electric vehicle, a hybrid or a conventional vehicle.
**Figure 1** exhibits a braking system according to a first embodiment.
**Figure 2** exhibits a braking system according to a second embodiment.
**Figure 3** exhibits a braking system according to the second embodiment.
**Figure 4** exhibits a braking system according to a third embodiment.
**Figure 5** exhibits a braking system according to a fourth embodiment.
**Figure 6** exhibits a braking system according to a fifth embodiment.
**Figure 7** exhibits a braking system according to a sixth embodiment

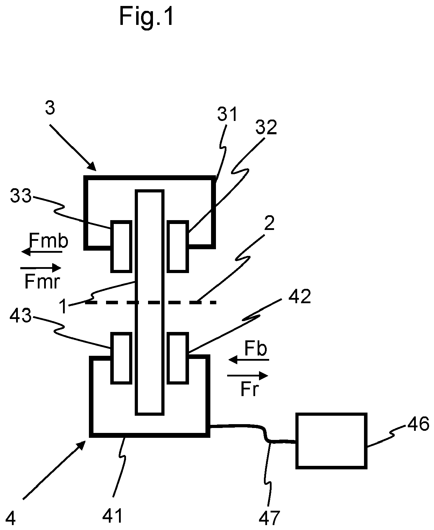

A first embodiment of the invention is explained by means of **Fig. 1****.**

**Fig. 1** exhibits a schematic drawing of a braking system of a commercial vehicle. A brake disc 1 is rotatably supported around a wheel axle 2 and is directly or indirectly fixed to a wheel (not shown) of the vehicle such that the brake disc 1 rotates conjointly with the wheel. The brake disc 1 forms a rotary deceleration force generating element and a rotary friction element.

A main braking system 3 comprises a main caliper 31 that is arranged to encompass the brake disc 1. The main caliper 31 is fixed to a chassis of the vehicle in a manner that prevents the main caliper 31 to rotate together with the brake disc 1. A first main brake pad 32 and a second main brake pad 33 are arranged in the main caliper 31 in a manner displaceable towards and away from the brake disc 1. A main release actuator 34 (not shown) in form of a pneumatic cylinder applies a main release force Fmr that causes the first main brake pad 32 and the second main brake pad 33 to move away from the brake disc 1 against a main spring. When the main release actuator 34 is vented, the main spring applies a main brake force Fmb to the main brake pads and urges the main brake pads towards the brake disc 1.

A secondary braking system 4 comprises a secondary caliper 41 that is arranged to encompass the brake disc 1. The secondary caliper 41 is fixed to the chassis of the vehicle in a manner that prevents the secondary caliper 41 to rotate together with the brake disc 1. A first secondary brake pad 42 and a second secondary brake pad 43 are arranged in the secondary caliper 41 in a manner displaceable towards and away from the brake disc 1. A secondary release actuator (not shown) in form of a pneumatic cylinder applies a secondary release force Fr that causes the first secondary brake pad 42 and the second secondary brake pad 43 to move away from the brake disc 1 against a secondary brake force Fb generated by a secondary brake actuator (not shown). The secondary brake actuator 45 is driven by a secondary brake actuating device 46. The secondary brake actuating device 46 is formed of a spring loaded actuator. Via a bowden wire 47, the tension force applicable by the secondary brake actuating device 46 is transmitted to the secondary brake actuator 45.

When the secondary release actuator 44 is vented, the secondary brake actuator 45, while driven by the secondary brake actuating device 46 via the bowden wire 46, applies a secondary brake force Fb to the secondary brake pads and urges the secondary brake pads towards the brake disc 1.

In this embodiment, although a common brake disc 1 is used by the main braking system 3 and the secondary braking system 4, parts subjected to regular wear like brake pads and movable parts more likely subjected to failure like actuators of the main braking system 3 and the secondary braking system 4 are separate. Thus, the secondary braking system 4 remains operable even if heavy usage of the main braking system 3 has led to extensive wear of wear parts.

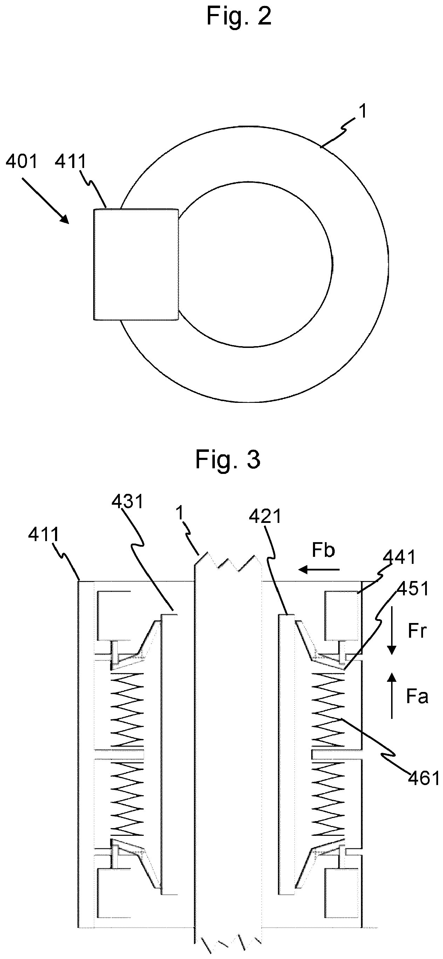

A second embodiment of the invention is explained by means of **Fig. 2** and **Fig. 3****.**

**Fig. 2** exhibits a schematic drawing of a braking system of a commercial vehicle.

Brake disc 1 and main braking system 3 are configured in the same manner as in the first embodiment.

A secondary braking system 401 comprises a secondary caliper 411 that is arranged to encompass the brake disc 1. The secondary caliper 411 is fixed to the chassis of the vehicle in a manner that prevents the secondary caliper 411 to rotate together with the brake disc 1.

**Fig. 3** discloses a detailed view of the secondary caliper 411. In the second embodiment, with respect to Fig. 3, the secondary caliper 411 is symmetrical in a height direction and in a width direction. The configuration of the secondary caliper 411 is explained by means of the upper right area in Fig. 3. The description of the upper right area can be transferred to the upper left, lower right and lower left area.

A first secondary brake pad 421 that is arranged facing the brake disc 1 is located in the secondary caliper 411. A second secondary brake pad 431 is arranged opposite to the first secondary brake pad 421 with respect to the brake disc 1.

A secondary brake actuation device 461 in form of a biased spring is arranged in the secondary caliper 411. Spring 461 acts on a secondary brake actuator 451 that is formed as a lever, and transfers an actuating force Fa to the lever 451. Via lever 451 the actuation force Fa is transmitted to the secondary brake pad 421 as brake force Fb. Depending on the shape of the lever 451, a force transmission ratio between the secondary actuation force Fa and the secondary brake force Fb may be larger than 1. This may be achieved by configuring the lever arm transmitting the secondary brake force Fb shorter than the lever arm receiving the secondary actuation force Fa. Further, the force transmission ratio may even be progressive, e.g. by further straightening the lever 451 or by providing a cam shaped design to the lever arm transmitting the secondary brake force Fb.

A secondary release actuator 441 is arranged in the secondary caliper 411. The secondary release actuator 441 is configured as a pneumatic cylinder. The secondary release actuator 441 is configured to exert a secondary release force Fr that acts on lever 451 opposite the spring 461 and countering the secondary activation force Fa. During operation of the vehicle, the secondary release actuator 441 applies a secondary release force Fr countering the secondary actuation force Fa. In a case where the vehicle shall be decelerated or locked in place by the secondary braking system, in particular if the vehicle ought to be deactivated, the pneumatic cylinder of the secondary release actuator 441 is vented, the secondary release force Fr diminishes and the secondary activation force Fa is transmitted via lever 451 to secondary brake pad 421 as secondary brake force Fb.

In this embodiment, only one secondary caliper 411 is provided. However, to increase the braking force by the secondary braking system, further secondary caliper(s) 411 may be provided that are identically configured as secondary caliper 411.

The secondary caliper 411 is configured as static caliper in this embodiment. This is possible since the first secondary brake pad 421 and the second secondary brake pad 431 comprise their own secondary brake actuators 451. The secondary caliper 411 may be, however, also configured as a floating caliper.

Although in the second embodiment, one secondary braking system 401 is provided, two or more secondary braking systems 401 may be distributed around the brake disc 1.

Also in the second embodiment, although a common brake disc 1 is used by the main braking system 3 and the secondary braking system 401, parts subjected to regular wear like brake pads and movable parts that are more likely subjected to failure like actuators of the main braking system 3 and the secondary braking system 4 are separate. Thus, the secondary braking system 4 remains operable even if heavy usage of the main braking system 3 has led to extensive wear of wear parts. Further, the secondary caliper 411 may be configured as a static caliper, reducing complexity of the system.

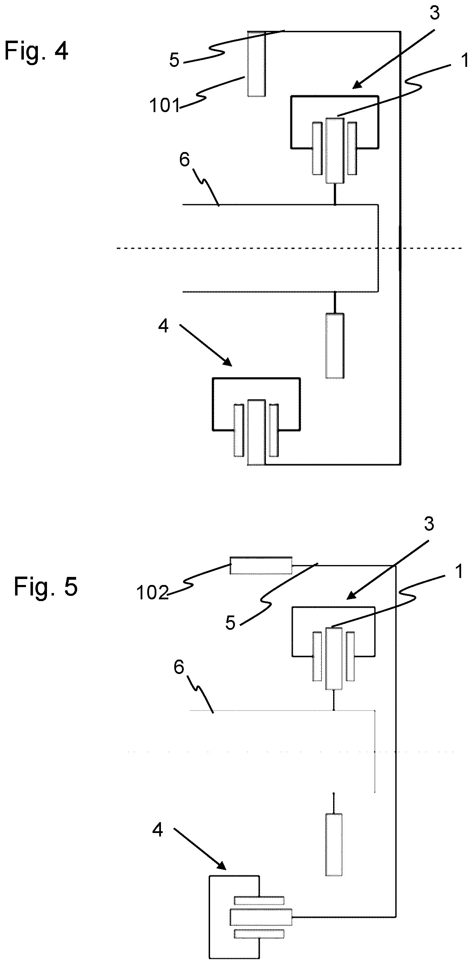

A third embodiment of the invention is explained by means of **Fig. 4****.**

**Fig. 4** exhibits a schematic drawing of a braking system of a commercial vehicle.

The braking system of this embodiment is identical to the braking system of the first embodiment except for the differences described below.

In addition to the brake disc 1 of the first embodiment, a secondary brake disc 101 is provided. The secondary brake disc 101 serves as a secondary rotary friction element and secondary rotary deceleration force generating element. In this embodiment, the secondary brake disc 101 is arranged radially and is fixed to a wheel rim 5. This allows to provide a secondary rotary friction element that is independent from space constraints to which the main rotary friction element is subjected and may be larger than the main rotary friction element. This is in particular feasible when the secondary brake disc 101 is fixed to the wheel rim 5 via its outer circumference. However, in an alternative embodiment, the secondary brake disc 101 may be independent from the wheel rim 5 and may be fixed to a wheel axle 6.

The main braking system 3 is identical to the main braking system 3 of the first embodiment and encompasses brake disc 1.

The secondary braking system 4 is identical to the secondary braking system 4 of the first embodiment. However, instead of encompassing brake disc 1, the secondary braking system 4 encompasses the secondary brake disc 101.

In the third embodiment, no common brake disc is used, but the main braking system and the secondary braking system comprise their own brake disc. This allows that, even in a case in that the main brake fails, e.g. due to overheating of brake pads and brake disc, the secondary braking system is functioning in a regular manner. Further, this configuration allows using a larger secondary brake disc 101 than the main brake disc 1, increasing the effectiveness of the secondary braking system 4.

A fourth embodiment of the invention is explained by means of **Fig. 5**

**Fig. 5** exhibits a schematic drawing of a braking system of a commercial vehicle.

The braking system of this embodiment is identical to the braking system of the first embodiment except for the differences described below.

In addition to the brake disc 1 of the first embodiment, a secondary brake disc 102 is provided. The secondary brake disc 102 serves as a secondary rotary friction element and a secondary rotary deceleration force generating element. In this embodiment, the secondary brake disc 102 is arranged with cylindrical extension in an axial direction with respect to a rotational axis of the brake disc 102 and is fixed to a wheel rim 5, or alternatively, part of the wheel rim. However, the secondary brake disc 102 may be independent from the wheel rim 5 and may be fixed to a wheel axle 6.

The main braking system 3 is identical to the main braking system 3 of the first embodiment and encompasses the brake disc 1.

The secondary braking system 4 is identical to the secondary braking system 4 of the first embodiment. However, instead of encompassing the brake disc 1, the secondary braking system 4 encompasses the secondary brake disc 102.

In the fourth like in the third embodiment, no common brake disc is used, but the main braking system and the secondary braking system comprise their own brake disc. This allows that, even in a case in that the main brake fails, e.g. due to overheating of brake pads and brake disc, the secondary braking system is functioning in a regular manner. Further, this configuration allows using a brake disc 102 having a larger diameter than the main brake disc 1, increasing the effectiveness of the secondary braking system 4. In the fourth embodiment, due to the axial extension of the secondary brake disc 102, the diameter may be even further increased and thus further increasing effectiveness of the secondary braking system 4.

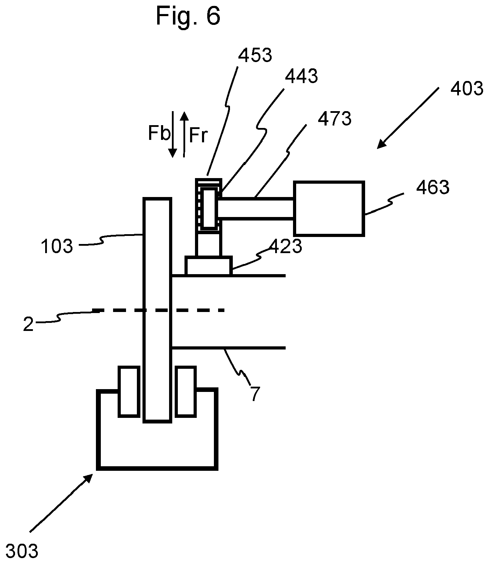

A fifth embodiment of the invention is explained by means of **Fig. 6**

**Fig. 6** exhibits a schematic drawing of a braking system of a commercial vehicle. A brake disc 103 is rotatably supported around a wheel axle 2 and is directly or indirectly fixed to a wheel (not shown) of the vehicle such that the brake disc rotates conjointly with the wheel. The brake disc 103 forms a rotary deceleration force generating element and a rotary friction element. The brake disc 103 comprises a brake disc neck 7 that forms a secondary rotary deceleration force generating element and an secondary rotary friction element.

A main braking system 303 is configured in the same manner as the main braking system 3 in the first embodiment and is arranged to encompass the brake disc 103.

A secondary braking system 403 is fixed to the chassis of the vehicle in a manner that prevents the secondary braking system 403 to rotate together with the brake disc 1. A secondary brake actuation device is provided in the secondary braking system 403 and is implemented as an electric motor 463 providing torque in a first orientation and a second orientation contrary to the fist orientation. A torque transmission rod 473, transmits the torque generated by the electric motor 463 to secondary actuator gear 443. Via a gear rod 453, torque applied by the electric motor 463 when rotated in the first orientation is transmitted to a secondary brake pad 423 as brake force Fb and when rotated in the second orientation, is transmitted to the secondary brake pad 423 as release force Fr. By the brake force Fb, the secondary brake pad 423 is pressed against the brake disc neck 7. By that, in a state of no rotation of the brake disc neck 7 relative to the secondary braking system 403, the vehicle's current position is maintained, and in case of movement of the vehicle and a rotation of the brake disc neck 7 relative to the secondary braking system 403, an secondary deceleration force is generated and applied to the vehicle. By the release force Fr, the secondary brake pad 423 is removed from the brake disc neck 7 and the vehicle or the vehicle movement is released.

In this embodiment, like in the third and fourth embodiments, no common brake disc is used, but the main braking system and the secondary braking system comprise their own rotary friction elements. This allows that, even in a case in that the main brake fails, e.g. due to overheating of brake pads and brake disc, the secondary braking system is functioning in a regular manner. Further, this configuration allows using an already present member as secondary rotary friction element, allowing reduction of complexity of the secondary braking system.

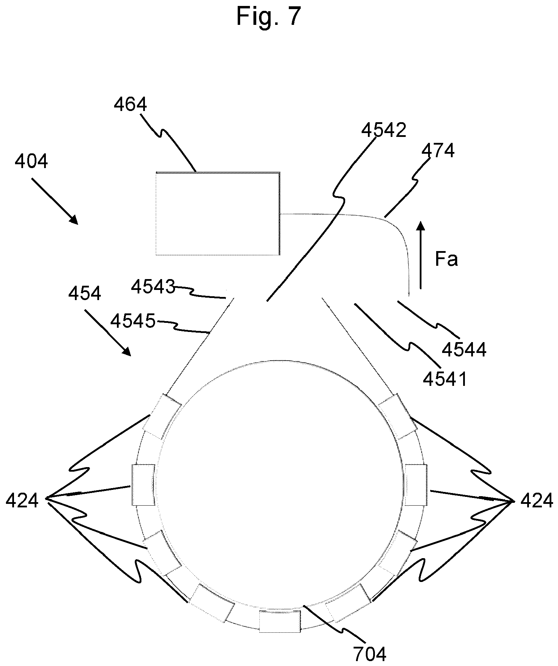

A sixth embodiment of the invention is explained by means of **Fig. 7**

**Fig. 7** exhibits a schematic drawing of a braking system of a commercial vehicle. A brake disc 104 (not shown), main braking system 304 and a brake disc neck 701 are configured like in the fifth embodiment.

A secondary braking system 404 is fixed to the chassis of the vehicle in a manner that prevents the secondary braking system 404 to rotate together with the brake disc 1. A secondary brake actuation device 464 is provided in the secondary braking system 404 and is implemented as a spring loaded cylinder providing a tension force Fa that is transmitted to a secondary brake actuator 454 via a Bowden wire 474. The secondary brake actuator 454 comprises a lever 4541 swiveling about a fulcrum 4542. The lever comprises a short arm 4543 and a long arm 4544. A chain 4545 loosely stretches from the short end 4543 of the lever around the brake disc neck 704 and back to the long end 4544 of the lever 4541. The distance of the chain's fixation to the short arm 4543 to the fulcrum 4542 is different in comparison to the distance from the chain's fixation to the long arm 4544 to the fulcrum 4542 such that swiveling the lever 4541 in one direction tightens the tension of the chain 4545 around the brake disc neck 704 and swiveling the lever 4541 in the other direction loosens the tension of the chain 4545 around the brake disc neck 704. The Bowden wire 474 is fixed to the end of the long arm 4544 and transfers the actuation force Fa from the secondary brake actuation device 464.

The chain 4545 is provided with several static secondary friction elements 424. When the lever is swiveled in the one direction by the secondary actuation force Fa, chain 4545 tightens around the brake disc neck 704 and the static secondary friction elements 424 are pressed against the brake disc neck 704. By that, in a state of no rotation of the brake disc neck 704 relative to the secondary braking system 404, the vehicle's current position is maintained, and in case of movement of the vehicle and a rotation of the brake disc neck 704 relative to the secondary braking system 404, a secondary deceleration force is generated and applied to the vehicle. By rotation of the lever 4541 in the other direction, chain 4545 loosens around the brake disc neck 704 and the static secondary friction elements 242 are removed from the brake disc neck 704.

In this embodiment, like in the third, fourth and fifth embodiments, no common brake disc is used, but the main braking system and the secondary braking system comprise their own rotary friction elements. This allows that, even in a case in that the main brake fails, e.g. due to overheating of brake pads and brake disc, the secondary braking system is functioning in a regular manner. Further, this configuration allows using an already present member as secondary rotary friction element, and allows using a simple secondary brake mechanism, resulting in reduction of complexity of the secondary braking system.

The invention was described by means of an embodiment. The embodiment is only of explanatory nature and does not restrict the invention as defined by the claims. As recognizable by the skilled person, deviations from the embodiment are possible without leaving the invention that is defined according to the scope of the claimed subject-matter.

Thus, the features of the above embodiments may be exchanged between the embodiments. E.g. the secondary braking system 401 of the second embodiment may be applied to a separate secondary brake disc 101, 102, of the third and fourth embodiment. Further, features of the above embodiments may be combined. E.g. the secondary braking systems 4, 401, 402 of the first, second third and fourth embodiment using a brake disc may be combined with an additional secondary braking system 403, 404 of the fifth and sixth embodiment using a brake disc neck as rotary friction element.

In all embodiments, the secondary brake actuator may comprise a biased spring allowing maintaining brake force Fb and adjusting to dimensional changes of braking systems e.g. due to temperature changes.

Linear actuating devices are interchangeable. E.g. pneumatic cylinders, hydraulic cylinders, spring loaded cylinders, and linear electromagnetic devices are applicable.

Rotary actuating devices are interchangeable. E.g. electric motors, pneumatic motors, hydraulic motors or biased spiral springs are applicable.

A commercial vehicle in the sense of this document is any vehicle, either self-driven or towed, for transporting goods or freight. These are in particular HGV, trucks, tractor units or trailers.

A main braking system in the sense of this document is a braking system that is configured to serve for vehicle deceleration during operation, in particular during movement of the vehicle.

A secondary braking system in the sense of this document is a braking system that is configured to serve as a backup for the main braking system and/or that is configured to provide a continuous locking function to maintain a vehicle's position, in particular, during a non-driving operation of the vehicle.

An axial direction of a rotary element is a direction that is in parallel to a rotation axis of the rotary element.

A radial direction of a rotary element is a direction that is perpendicular to an axial direction or the rotary element.

In this document, the terms "and", "or" and "either... or" are used as conjunctions in a meaning similar to the logical conjunctions "AND", "OR" (often also "and/or") or "XOR", respectively. In particular, in contrast to "either... or", the term "or" also includes occurrence of both operands.

Method steps indicated in the description or the claims only serve an enumerative purpose of the method steps. They only imply a given sequence or an order where their sequence or order is explicitly expressed or is - obvious for the skilled person - mandatory due to their nature. In particular, the listing of method steps do not imply that this listing is exhaustive. Also, not all method steps described in an embodiment are required to implement the invention. The required method steps are defined by the claims only.

In the claims, the word "comprising" does not exclude other elements or steps. The indefinite article "a" or "an" does not exclude a plurality and has to be understood as "at least one".

### LIST OF REFERENCE NUMBERS

- 1, 103: brake disc, rotary friction element, rotary deceleration force generating element
- 101, 102: secondary brake disc, secondary rotary friction element, secondary rotary deceleration force generating element
- 2: wheel axle
- 3, 301, 302: main braking system
- 31: main caliper
- 32: first main brake pad
- 33: second main brake pad
- 34: main release actuator (not shown)

- 4: secondary braking system (first embodiment)
- 41: secondary caliper
- 42: first secondary brake pad
- 43: second secondary brake pad
- 44: secondary release actuator (not shown)
- 45: secondary brake actuator (not shown)
- 46: secondary brake actuating device
- 47: Bowden wire

- 401: secondary braking system (second embodiment)
- 411: secondary caliper
- 421: first secondary brake pad
- 431: second secondary brake pad
- 441: secondary release actuator
- 451: secondary brake actuator
- 461: secondary brake actuating device
- 471: Bowden wire
- 403: secondary braking system (fifth embodiment)
- 423: secondary brake pad
- 453: electric motor, secondary brake actuator
- 463: secondary brake actuating device
- 473: torque transmission rod

- 404: secondary braking system (sixth embodiment)
- 424: secondary brake pads, static secondary friction elements
- 454: secondary brake actuator
- 4541: lever
- 4542: fulcrum
- 4543: short arm
- 4544: long arm
- 4545: chain
- 464: secondary brake actuating device
- 474: torque transmission rod

- 5: wheel rim
- 6: wheel axle
- 7, 704: brake disc neck, secondary rotary friction element, secondary rotary deceleration force generating element

## Claims

1. An secondary braking system for a commercial vehicle, comprising:
a rotary deceleration force generating element (1, 101, 102, 103, 7, 704) fixed to or being part of and thus rotating conjointly with a wheel of the vehicle, and
a stationary deceleration force generating element (42, 43, 421, 431, 423, 424) that is indirectly or directly fixed in a manner to a chassis of the vehicle that prohibits the stationary decelerating force generating element to rotate with the rotary deceleration force generating element (1, 101, 102, 103),
wherein the stationary deceleration force generating element (42, 43, 421, 431, 423, 424) is configured to transmit a braking force Fb onto the rotary deceleration force generating element (1, 101, 102, 103), and
the stationary deceleration force generating element (42, 43, 421, 431, 423, 424) is independent from a main braking system (3, 301, 302) of the commercial vehicle.

2. The secondary braking system of the previous claim, wherein
the rotary deceleration force generating element (1, 101, 102, 103, 7, 704) comprises a rotary friction element
the stationary deceleration force generating element (42, 43, 421, 431, 423, 424) comprises
a stationary friction element that is movable between a release position and a locking position towards and away from the rotary friction element, and
an actuator (45, 451, 453, 454) configured to exert force to the stationary friction element to move it between the release position and the braking position, and
wherein the stationary friction element and the actuator (45, 451, 453, 454) are independent from the main braking system of the vehicle.

3. The secondary braking system according to any of the previous claims, wherein the rotary deceleration force generating element (1, 101, 102, 103, 7, 704) further comprises an actuating device (46, 461, 463, 464) that is configured to exert an actuation force Fa to the second braking system (4, 401, 403, 404) and is independent from the main braking system (3, 301, 302).

4. The secondary braking system according to any of the previous claims, wherein the rotary friction element is a rotary friction element (1, 103) that is also part of the main braking system (3, 301, 302).

5. The secondary braking system according to any of claims 1 to 3, wherein the rotary friction element (101, 102, 7, 704) is a brake disc, brake drum, brake disc neck or part of the wheel rim that are distinct from a rotary friction element of the main braking system.

6. The secondary braking system according to claim 5, wherein the rotary friction element is a brake disc (102) that extends in an axial direction.

7. The secondary braking system according to claim 5, wherein the rotary friction element is a brake disc (1, 101, 103) that extends in a radial direction.

8. The secondary braking system according to any of claims 3 to 7, wherein the actuating device (46, 461, 463, 464) comprises a biased spring chamber that is configured to exert the actuation force Fa to the secondary braking system (4, 401, 403, 404) in a deactivated state of the vehicle.

9. The secondary braking system according to any of claims 2 to 8, wherein the actuator (45, 451, 453, 454) or the actuating device (46, 461, 463, 464) comprises readjusting means that maintain the brake force (Fb) when the stationary friction element (42, 43, 421, 431, 423, 424) is in the locked position even if the dimensions of the rotary friction element (1, 101, 102, 103, 7, 704), the stationary friction element (42, 43, 421, 431, 423, 424) or the actuator (45, 451, 453, 454) change, in particular shrink due to temperature changes.

10. The secondary braking system according to any of claims 3 to 9, wherein the actuation device (46, 461, 463, 464) exerts the actuation force Fa by means of a pneumatic device, in particular a pneumatic cylinder, hydraulic device, in particular a hydraulic cylinder, electro mechanic device, in particular an electric motor or mechanic device, in particular a spring.

11. The secondary braking system according to any of claims 3 to 10, wherein the actuation force (Fa) is transmitted to the actuator via an intermediate element (47, 471, 473, 474), in particular a Bowden cable, a rope and pulley assembly, a pushing rod, a torque rod, a wedge, a cam or a gear.

12. The secondary braking system according to any of claims 3 to 11, wherein the stationary friction element (42, 43, 421, 431, 423, 424), the actuator (45, 451, 453, 454) and the actuating device (46, 461, 463, 464) are arranged around at least a section of the rotary friction element (1, 101, 102, 103, 7, 704).

13. The secondary braking system according to any of claims 3 to 12, wherein
the secondary braking system (403) comprises a pushing element (453) configured to push a stationary friction element (423) towards the rotary friction element (7), and
the actuation force (Fa) pushes the pushing element (453) towards the rotary friction element (7) such that the stationary friction element (423) is pressed against the rotary friction element (7).

14. The secondary braking system according to any of claims 3 to 13, wherein
the secondary braking system comprises a tie element (4545) provided with a plurality of stationary friction elements (424), and
the actuation force (Fa) tightens the tie element (4545) around the rotary friction element (704) such that the stationary friction elements (424) are pressed against the rotary friction element (704).

15. A commercial vehicle, in particular an electric vehicle, in particular a battery electric or fuel cell electric vehicle, or hybrid vehicle, comprising the secondary braking system according to any of the previous claims.
